# EUROPÄISCHE PATENTANMELDUNG

(11) **EP 1 060 973 A2**
(43) Veröffentlichungstag der Anmeldung: **20.12.2000**
(21) Anmeldenummer: 00111888.4
(22) Anmeldetag: 09.06.2000
(51) Int. Cl.: B62D 1/10

(54) **Baugruppe aus einem Lenkrad und einer Lenkwelle**

(30) Priorität: 15.06.1999 DE 29910482 U
(71) Anmelder: TRW Automotive Safety Systems GmbH & Co. KG, 63743 Aschaffenburg (DE)
(72) Erfinder: Nigrin, Anke, 97816 Lohr (DE)
(74) Vertreter: Sties, Jochen, Dipl.-Ing.

(57) **Zusammenfassung**

Die Erfindung betrifft eine Baugruppe aus einem Lenkrad (12) und einer Lenkwelle (10), wobei das Lenkrad mit einer Haltefläche (22) und die Lenkwelle mit zwei Rasthaken (14, 16) versehen ist. Die Rasthaken sind zwischen einer Raststellung, in der sie an der Haltefläche des Lenkrades angreifen und das Lenkrad in bezüglich der Lenkwelle axialer Richtung an dieser fixieren, und einer Freigabestellung bewegbar, in der das Lenkrad von der Lenkwelle abgezogen werden kann. Die Baugruppe ist dadurch gekennzeichnet, daß am Lenkrad zwei Spanndorne (44, 46) anbringbar sind, mittels denen die Rasthaken (14, 16) aus der Raststellung in die Freigabestellung gebracht werden können, und daß jeder Spanndorn (44, 46) von außerhalb des Lenkrades (12) zugänglich ist.

## Beschreibung

Die Erfindung betrifft eine Baugruppe aus einem Lenkrad und einer Lenkwelle, wobei das Lenkrad mit einer Haltefläche und die Lenkwelle mit zwei Rasthaken versehen ist, die zwischen einer Raststellung, in der sie an der Haltefläche des Lenkrades angreifen und das Lenkrad in bezüglich der Lenkwelle axialer Richtung an dieser fixieren, und einer Freigabestellung bewegbar sind, in der das Lenkrad von der Lenkwelle abgezogen werden kann.

Eine solche Baugruppe ist aus der deutschen Patentschrift 195 44 580 bekannt. Die Rasthaken befestigen das Lenkrad in axialer Richtung formschlüssig an der Lenkwelle. Zum Lösen des Lenkrades müssen die Rasthaken in die Freigabestellung bewegt werden. Zu diesem Zweck sind an den Rasthaken Verlängerungen vorgesehen, die in das Innere des Lenkrades hineinragen und an denen mit einem geeigneten Werkzeug angegriffen werden kann. Bei dieser Gestaltung muß, damit das Lenkrad von der Lenkwelle gelöst werden kann, das bei modernen Lenkrädern im Inneren angebrachte Gassackmodul abgenommen werden, da andernfalls kein Zugang zu den Verlängerungen des Rasthakens möglich ist.

Die Aufgabe der Erfindung besteht somit darin, eine Baugruppe der eingangs genannten Art dahingehend weiterzubilden, daß die Rasthaken in ihre Freigabestellung gebracht werden können, ohne daß Funktionsteile aus dem Inneren des Lenkrades entfernt werden müssen.

Diese Aufgabe wird bei einer Baugruppe der eingangs genannten Art dadurch gelöst, daß am Lenkrad zwei Spanndorne anbringbar sind, mittels denen die Rasthaken aus der Raststellung in die Freigabestellung gebracht werden können, und daß jeder Spanndorn von außerhalb des Lenkrades zugänglich ist. Somit können die Rasthaken mittels der Spanndorne, ohne daß ein Zugang zum Inneren des Lenkrades erforderlich ist und insbesondere ohne daß Funktionsteile aus dem Inneren des Lenkrades entfernt werden müssen, in die Freigabestellung gebracht werden, so daß das Lenkrad von der Lenkwelle abgezogen werden kann. Die Spanndorne können entweder permanent am Lenkrad vorhanden sein oder nur zum Zwecke des Demontierens in die entsprechenden Bohrungen im Lenkrad eingeschraubt werden.

Gemäß einer bevorzugten Ausführungsform der Erfindung ist vorgesehen, daß die Rasthaken schwenkbar auf einer gemeinsamen Achse angebracht sind, die sich senkrecht zur Längsachse der Lenkwelle erstreckt und durch diese Längsachse verläuft. Dies führt zu einer besonders kompakten Gestaltung, so daß die im Lenkrad für den Durchtritt der Rasthaken erforderliche Öffnung klein ausgeführt werden kann.

Vorzugsweise ist vorgesehen, daß zwischen jedem Spanndorn und dem zugehörigen Rasthaken ein Schieberelement angebracht ist. Somit greift der Spanndorn nicht mehr unmittelbar an dem entsprechenden Rasthaken an, was verschiedene konstruktive Freiheiten gibt. Beispielsweise kann jedes Schieberelement mit einer Nut versehen sein, in die ein Anschlag eingreift. Dieser Anschlag begrenzt den maximalen Verschiebeweg des Schieberelementes, so daß der Winkel begrenzt werden kann, um den die Rasthaken aus ihrer Raststellung in die Freigabestellung geschwenkt werden können. Auf diese Weise kann zuverlässig verhindert werden, daß eine Feder, welche die Rasthaken in die Raststellung beaufschlagt, beim Überführen der Rasthaken in die Freigabestellung übermäßig stark beansprucht wird. Dies ist wichtig, um beim erneuten Verrasten des Lenkrades an der Lenkwelle zu gewährleisten, daß die Rasthaken mit der erforderlichen Sicherheit an der Haltefläche angreifen.

Die Feder, welche die Rasthaken in die Raststellung beaufschlagt, ist vorzugsweise eine Blattfeder, die zwischen den Rasthaken angeordnet ist. Dies führt zu einer besonders kompakten Gestaltung.

Vorzugsweise ist vorgesehen, daß die Lenkwelle mit einem Absatz versehen ist und zwischen diesem Absatz und einer zugeordneten Fläche des Lenkrades mindestens eine Tellerfeder angeordnet ist. Diese Tellerfeder kompensiert ein etwaiges Spiel, so daß das Lenkrad fest an der Lenkwelle angebracht ist.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einem Querschnitt eine erfindungsgemäße Baugruppe mit Lenkwelle und an dieser angebrachtem Lenkrad;
- Figur 2 in einer perspektivischen Ansicht die bei der erfindungsgemäßen Baugruppe verwendeten Rasthaken;
- Figur 3 in einer perspektivischen Ansicht die Lenkwelle mit den Rasthaken sowie die zur Betätigung der Rasthaken verwendeten Funktionsteile, wobei das Lenkrad, in das die Funktionsteile eingebettet sind, weggelassen wurde;
- Figur 4 in einer Ansicht entsprechend derjenigen von Figur 1 die Baugruppe mit den Rasthaken in ihrer Freigabestellung; und
- Figur 5 in einer Draufsicht die erfindungsgemäße Baugruppe.

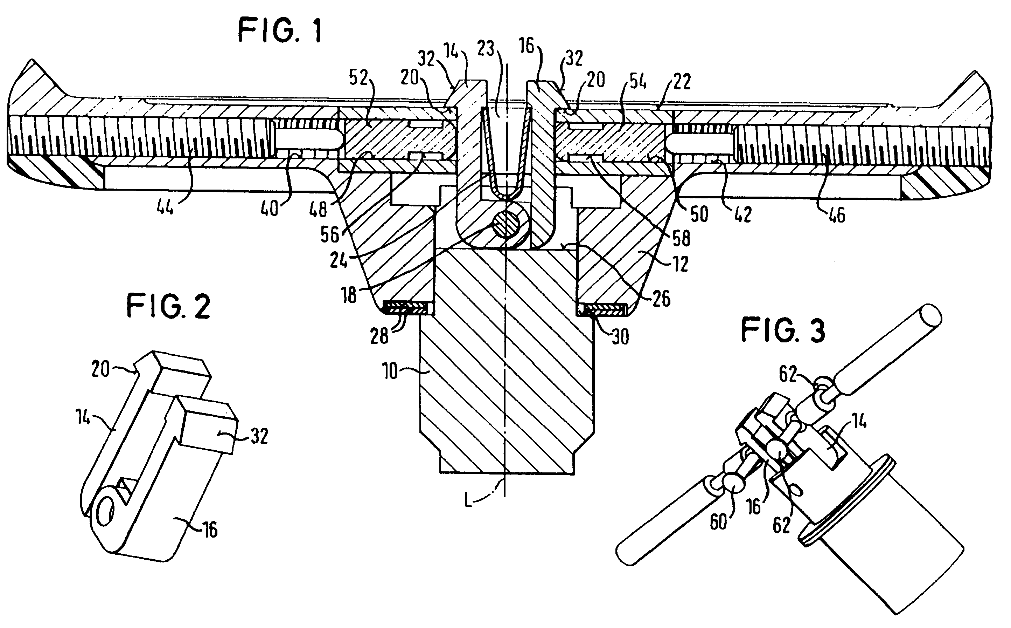

In Figur 1 ist in einem Schnitt eine erfindungsgemäße Baugruppe dargestellt. Diese besteht im wesentlichen aus einer Lenkwelle 10, mit der ein Lenkrad 12 fest verbunden werden soll. Vom Lenkrad ist hier nur ein Teil des Grundkörpers gezeigt; die Lenkradspeichen sowie das Innere des Lenkrades, in welchem üblicherweise ein Gassackmodul angeordnet ist, sind hier nicht dargestellt.

An der Lenkwelle 10 sind zwei Rasthaken 14, 16 schwenkbar auf einer Achse 18 gelagert. Die Achse 18 erstreckt sich senkrecht zur Längsachse L der Lenkwelle 10 und verläuft durch diese hindurch.

Jeder Rasthaken 14, 16 ist mit einer Rastfläche 20 versehen, die an einer auf der Innenseite des Lenkrades 12 ausgebildeten Haltefläche 22 anliegen kann. In der Haltefläche 22 ist eine Durchtrittsöffnung 23 ausgebildet, die den Durchtritt der Rasthaken 14, 16 ermöglicht, so daß die Rastflächen 20 auf die von der Lenkwelle 10 abgewandte Seite des Lenkrades 12 gelangen können.

Zwischen den beiden Rasthaken 14, 16 ist eine Blattfeder 24 angeordnet, welche die Rasthaken nach außen beaufschlagt. Diese Bewegung nach außen wird jedoch begrenzt durch Anlage des unteren Endes der Rasthaken auf einer Abstützfläche 26 an der Lenkwelle 10.

Zum Anbringen des Lenkrades 12 an der Lenkwelle 10 werden zunächst zwei Tellerfedern 28 auf einen Absatz 30 der Lenkwelle 10 aufgelegt. Anschließend wird das Lenkrad so auf die Lenkwelle aufgesetzt, daß an den Rasthaken ausgebildete Schrägen 32 die Rasthaken nach innen drücken, so daß sie durch die Öffnung 23 hindurchtreten können. Sobald das Lenkrad weit genug auf die Lenkwelle 10 aufgesetzt ist, schnappen die Rasthaken 14, 16 unter der Wirkung der Blattfeder 24 nach außen, so daß die Rastflächen 20 an der Haltefläche 22 des Lenkrades anliegen und das Lenkrad in axialer Richtung an der Lenkwelle festgelegt ist. Die Tellerfedern 28 beseitigen hierbei ein eventuelles Spiel. Die Öffnung 23 ist dabei so ausgestaltet, daß zusammen mit den Rasthaken 14, 16 eine Drehbewegung des Lenkrades 12 auf die Lenkwelle 10 übertragen wird.

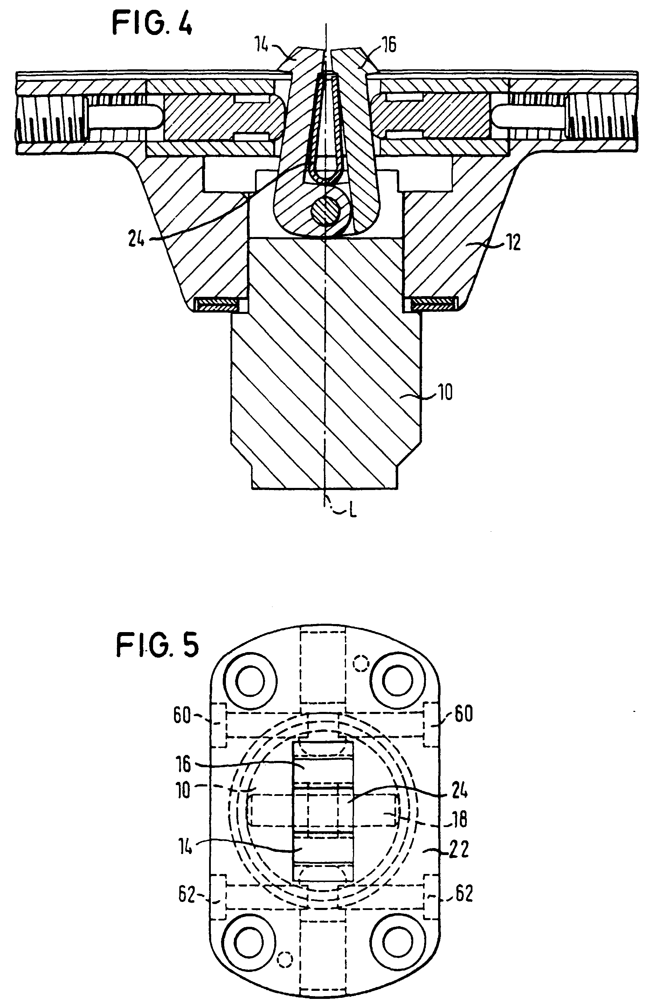

Wenn das Lenkrad 12 wieder von der Lenkwelle 10 gelöst werden muß, müssen die Rasthaken aus ihrer in den Figuren 1 und 5 gezeigten Raststellung in ihre in Figur 4 gezeigte Freigabestellung gebracht werden, in der die Rasthaken 14, 16 mit ihren Rastflächen 20 so weit zur Längsachse L der Lenkwelle hin verschwenkt sind, daß das Lenkrad frei abgezogen werden kann.

Zu diesem Zweck sind im Lenkrad 12 zwei in radialer Richtung verlaufende Gewindebohrungen 40, 42 ausgebildet, die sich senkrecht zur Längsachse L der Lenkwelle 10 erstrecken und auf der Außenseite des Lenkrades münden. In jede Gewindebohrung 40, 42 ist ein Spanndorn 44, 46 eingeschraubt.

An jede Gewindebohrung 40, 42 grenzt an dem radial innenliegenden Ende eine Bohrung 48, 50 an, in der jeweils ein Schieberelement 52, 54 angeordnet ist. Jedes Schieberelement 52, 54 ist mit einer Nut 56, 58 versehen, in die jeweils zwei Anschläge 60, 62 eingreifen.

Die Anordnung und Abmessungen der Anschläge 60, 62 sind so auf die Abmessungen der Nuten 56, 58 der Schieberelemente 52, 54 abgestimmt, daß jedes Schieberelement zwischen einer radial außenliegenden Stellung, in der es so weit zurückgezogen ist, daß das entsprechende Rastelement sich in der Raststellung befinden kann, und einer radial innenliegenden Stellung verschoben werden kann, in der jedes Rastelement genau so weit zur Längsachse L hin verschwenkt ist, daß das Lenkrad frei abgezogen werden kann. Auf diese Weise ist verhindert, daß über die Spanndorne, die mit einem geeigneten Werkzeug von außerhalb des Lenkrades in dieses eingeschraubt werden können, die Rasthaken 14, 16 so weit nach innen über die Freigabestellung hinaus verschwenkt werden können, daß die Blattfeder 24 beschädigt wird.

## Patentansprüche

1. Baugruppe aus einem Lenkrad (12) und einer Lenkwelle (10), wobei das Lenkrad mit einer Haltefläche (22) und die Lenkwelle mit zwei Rasthaken (14, 16) versehen ist, die zwischen einer Raststellung, in der sie an der Haltefläche des Lenkrades angreifen und das Lenkrad in bezüglich der Lenkwelle axialer Richtung an dieser fixieren, und einer Freigabestellung bewegbar sind, in der das Lenkrad von der Lenkwelle abgezogen werden kann,
dadurch gekennzeichnet, daß am Lenkrad zwei Spanndorne (44, 46) anbringbar sind, mittels denen die Rasthaken (14, 16) aus der Raststellung in die Freigabestellung gebracht werden können, und daß jeder Spanndorn (44, 46) von außerhalb des Lenkrades (12) zugänglich ist.

2. Baugruppe nach Anspruch 1, dadurch gekennzeichnet, daß die Rasthaken (44, 46) schwenkbar auf einer gemeinsamen Achse (18) angebracht sind, die sich senkrecht zur Längsachse (L) der Lenkwelle (10) erstreckt und durch diese Längsachse verläuft.

3. Baugruppe nach einem der Ansprüche 1 und 2, dadurch gekennzeichnet, daß die Lenkwelle einen Absatz (30) aufweist und daß zwischen diesem Absatz und einer zugeordneten Fläche des Lenkrades (12) mindestens eine Tellerfeder (28) angeordnet ist.

4. Baugruppe nach einem der Ansprüche 1 bis 3, dadurch gekennzeichnet, daß zwischen jedem Spanndorn (44, 46) und dem zugehörigen Rasthaken (14, 16) ein Schieberelement (52, 54) angebracht ist.

5. Baugruppe nach Anspruch 4, dadurch gekennzeichnet, daß das Schieberelement mit einer Nut (56, 58) versehen ist, in die ein Anschlag (60, 62) eingreift.

6. Baugruppe nach einem der vorhergehenden Ansprüche, dadurch gekennzeichnet, daß jeder Spanndorn (44, 46) sich in bezüglich der Lenkwelle (10) radialer Richtung bis außerhalb des Lenkrades erstreckt.

7. Baugruppe nach einem der vorhergehenden Ansprüche, dadurch gekennzeichnet, daß zwischen den Rasthaken (14, 16) eine Blattfeder (24) angeordnet ist.
